# EUROPEAN PATENT APPLICATION

(11) **EP 4 278 925 A1**
(43) Date of publication of application: **22.11.2023**
(21) Application number: 22174291.9
(22) Date of filing: 19.05.2022
(51) Int. Cl.: A46B 13/00, B26B 19/00, B26B 19/38, B21D 26/02, A46B 13/02

(54) **PERSONAL CARE DEVICE AND METHOD OF MANUFACTURING SUCH PERSONAL CARE DEVICE**

(71) Applicant: Braun GmbH, 61476 Kronberg im Taunus (DE)
(72) Inventor: ERNDT, Andreas, 61476 Kronberg (DE); PIESKER, Thorsten, 61476 Kronberg (DE); STEGMANN, Wolfgang, 61476 Kronberg (DE); SIKORA, Bernhard, 61476 Kronberg (DE)
(74) Representative: P&G Patent Germany

(57) **Abstract**

The present invention relates to a personal care device such as an electric hair cutter like shaver or toothbrush, and to a method of manufacturing such personal care device. More particularly, the personal care device comprises a handle and a function head supporting at least one personal care tool, said function head being attached to said handle, wherein at least one of said handle and said function head includes an outer metal shell formed in one piece with an integral, homogeneous, seamless structure having a ring-like or sleeve-like shape with closed annular cross-sections. Said outer metal shell includes at least one undercut portion which is formed with a hydraulic pressure forming step applying hydraulic pressure onto a side of a metal shell blank positioned in a mold to deform the metal shell blank and press an opposite side of the metal shell blank against said mold to adopt a contour of the mold.

## Description

### FIELD OF THE INVENTION

The present invention relates to a personal care device and to a method of manufacturing such personal care device. More particularly, the present invention relates to a personal care device such as a hair cutter or tooth brush with an outer metal shell, comprising a handle and a function head such as a cutter head or brush head attached thereto, wherein at least one of the handle and the function head includes said outer metal shell which may be part of a housing accommodating functional components such as electronics, an electric drive unit including a motor and a mechanical transmitter, or power supply or storage component such as batteries. The personal care device also may include a base station for loading and/or cleaning and/or parking the handheld device, wherein the base station also may include such outer metal shell which may be part of a housing accommodating functional components such as electronics, a power supply or cleaning tools.

### BACKGROUND OF THE INVENTION

Hand-held personal care devices may effect various personal care functions such as hair cutting, shaving, skin treatment, tooth brushing and cleaning, nail trimming or other personal care treatments. Usually, the handles of such personal care devices have a double function, wherein - on the one hand - the handle is the gripping portion for gripping and holding the personal care device by hand and, on the other hand, the handle accommodates or supports functional components such as an electric drive unit for driving personal care tools such as hair cutting tools, a brush unit, skin pealing or massaging tools, nail polishing tools or other personal care tools. More particularly, the handle may form a housing in which an electric motor and a mechanical transmitter for transmitting the drive motion of the motor to a personal care tool, and, furthermore, electronic control equipment and electrical powering equipment such as batteries, a net supply terminal and information equipment such as displays may be accommodated. The handle may be water-tight and/or sealed against moisture and/or dust to protect the functional components accommodated in the housing.

The function head of such personal care devices usually supports the personal care tool or a plurality of personal care tools such as a shear foil cutter, long hair cutters and trimmers, or one or more brush units, interdental cleaner etc., wherein such personal care tools may be supported movably relative to a frame or shell of the function head, wherein a mechanical transmitter may connect the movably supported tools to the drive unit in the handle.

The base station may receive or may be connected to the hand-held personal care device for loading and/or cleaning and/or parking the handheld device, wherein the base station's housing usually accommodates functional components such as electronics like data processors and a display for communicating with the hand-held device, a power supply with electric connectors for charging the hand-held device, or cleaning tools such as a washer for cleaning the function head of the hand-held device.

Usually, the outer shells of the handle, the function head and the base station are mainly made from plastic, wherein a plurality of plastic parts such as hard plastic parts and soft plastic parts may be mounted to each other to form the outer shell.

On the other hand, the handle and/or the function head may include an outer metal shell which may form the outer surface of the handle to be gripped by hand or fingers and/or may form at least a part of a housing accommodating the aforementioned functional components and/or may form a frame for supporting personal care tools of the function head. Such metal shells, when forming the outer surface of the handle and/or the function head, may provide for a cool touch feeling for the user and possesses high strength, rigidity and high resistance against wear and tear, scratches and chemical environments. In addition, outer metal shells provide for a precious esthetical look and a clean appearance.

When mounting functional components into and/or onto such outer metal shell, it is quite difficult to allow for easy and precise manufacturing of the metal shell on the one hand and allow for easy assembling of the personal care device including mounting the functional components on the other hand, in particular when the outer metal shell has a tight fit and small dimensions despite the functional components to be accommodated inside the metal shell. In addition, openings and perforations in the metal shell used for inserting functional components or giving access to functional components such as displays, controllers or switches or connectors such as loading cable terminals, may have sharp and burred edges.

Meeting such diverging needs becomes even more difficult when the outer shell should have a hollow shape and be made in one piece with an integral, homogenous, seamless structure. Such one-piece structure without visible seams like welding seams between different shell parts are not only desired from an esthetical point of view, but also increases strength and rigidity and reduces mounting steps. However, such one-piece structure with a hollow ring-like or sleeve-like shape necessitates at least one opening through which the aforementioned functional components such as electronics, drive units or batteries or mechanical transmitters can be inserted or through which access to internal components is possible. Providing large opening facilitates the mounting process, but reduces strength, whereas small openings do not allow for easy mounting. In any case, it is difficult to achieve a tight fit of the metal shell with the functional components without compromising an ergonomic shape and an esthetically pleasing, three-dimensional complex appearance.

Moreover, it revealed that edges of a metal shell may create edges which can infringe the users skin.

### SUMMARY OF THE INVENTION

It is an objective underlying the present invention to provide for an improved personal care device avoiding at least one of the disadvantages of the prior art and/or further developing the existing solutions. It is another objective underlying the present invention to provide for an improved method of manufacturing such personal care device including an outer metal shell and/or metal housing.

A further objective underlying the invention is to provide a metal housing or outer metal shell and method to manufacture same without the risk to infringe the users skin at edges of the metal shell or metal housing.

A further objective underlying the invention is to provide for an improved outer metal shell for such personal care device combining a small foot print and tight fit with functional components mounted into and/or onto the metal shell and easy mounting of said functional components, without sacrificing a functional shape of the outer metal shell providing for rigidity and ergonomic handling.

A still further object underlying the present invention is to provide for an improved manufacturing method for manufacturing an outer metal shell of a personal care device, allowing for precise forming of the metal shell despite complex three-dimensional shapes thereof, without necessitating a high number of processing steps with complicated, expensive tools.

To achieve at least one of the aforementioned objectives, a personal care device comprising the features of claim 1 is provided. To achieve at least one of the aforementioned objectives, a method of manufacturing a personal care device comprising the features of claim 18 is provided. Further advantageous aspects are comprised by the features of the sub-claims.

Preferably, a personal care device such as hair cutter or tooth brush is provided, comprising a handle and a function head supporting at least one personal care tool, said function head being attached to said handle, wherein at least one of said handle and said function head includes an outer metal shell, said metal shell having at least one opening wherein at least one plastic chassis member is accommodated in said outer metal shell that said plastic chassis member having a protrusion through said opening in said outer metal shell and projecting beyond an outer surface of a metal shell section surrounding said opening and/or said plastic chassis member is fully covering an outer edge of said openings. Thus, it is not necessarily required to add a further manufacturing step for rounding edges at openings of the outer shell as these edges are either fully covered by modules or plastic chassis parts mounted within such openings and thus covering the edges. Preferably the mounted modules or plastic chassis part(s) is/are provided as a kind of skin bumper or skin protector projecting beyond the outer surface of the outer shell and/or projecting beyond the top ends of the outer shell.

More preferably, said outer metal shell includes at least one lateral opening through which a functional component at least partly extending to and/or accessible from an outside of the outer metal shell is connected to another functional component accommodated inside said outer metal shell. Thus, the lateral opening in said metal shell is accommodating therein a functional component or plastic chassis part.

More preferably, the handle is provided with a front module and a back module at opposing lateral sides thereof each module being provided with said plastic chassis member extending through corresponding openings of said outer metal shell.

More preferably, the handle is provided with a top module and a bottom module at opposing longitudinal sides thereof each module being provided with said plastic chassis member extending through corresponding openings of said outer metal shell.

More preferably, said function head is provided with said plastic chassis member extending through a bottom opening and a top opening of said function head.

More preferably, said protrusion includes a collar overlapping said opening and/or seated onto said outer surface of said metal shell section surrounding the opening.

More preferably, said protrusion projects beyond the outer surface of the metal shell by an amount which is substantially constant along the entire opening even when the opening's contour does not extend in one plane and/or by an amount ranging from 0.05 to 1 mm or 0.1 to 0.5 mm or 0.1 to 0.3 mm.

More preferably, said protrusion is made from soft plastic and/or hard plastic with an outer contour matching the inner contour of the opening in terms of shape and dimension to provide for sealing and/or form-fitting and/or snap-fitting engagement of the protrusion with the metal shell.

More preferably, said metal shell has opposite end portions each defining a closed ring-shaped cross-section, wherein an intermediate section between said opposite end portions includes at least one lateral opening and/or lateral perforation for accessing at least one functional component accommodated inside said outer metal shell.

More preferably, said outer metal shell is formed in one piece with an integral, homogeneous, seamless structure having a ring-like or sleeve-like shape with closed annular cross-sections.

More preferably, said outer metal shell is a hydraulic pressure-formed portion deformed by hydraulic pressure and/or a hydroformed portion.

More preferably, said outer metal shell includes at least one undercut portion.

More preferably, said outer metal shell includes a bulging intermediate section defining a maximum cross-sectional area and a pair of opposite end portions provided with frontal openings having a cross-sectional area smaller than said maximum cross-sectional area of the bulging intermediate section.

More preferably, said outer metal shell includes at least one opening surrounded by a three-dimensionally shaped metal shell section, said opening having a three-dimensionally shaped edge contour extending substantially perpendicular to the surrounding metal shell section along the entire contour of the opening, said surrounding shell portion neighboring and surrounding said opening having a varying orientation changing along the opening .

More preferably, said metal shell has opposite end portions each defining a closed ring-shaped cross-section, wherein an intermediate section between said opposite end portions includes at least one lateral opening and/or lateral perforation for accessing at least one functional component accommodated inside said outer metal shell.

More preferably, said outer metal shell has an elongated, hollow shape with frontal openings at opposite axial end portions, said axial end portions having closed annular cross-sections surrounding the openings.

More preferably, said metal shell is made from from stainless steel or a steel containing chromium, nickel and molybdenum, particularly 10-25 mass% Cr, 5-20 mass% Ni and 1-5 mass% Mo or 16-18 mass% Cr, 10-14 mass% Ni and 2-3 mass% Mo.

A method of manufacturing a handheld personal care device such as hair cutter or tooth brush with an outer metal shell, comprising the steps of
forming the outer metal shell into a desired shape, and
mounting functional components for performing or helping to perform a personal care function into and/or onto said formed outer metal shell, wherein said forming step includes a hydraulic pressure-forming step applying hydraulic pressure onto a side of a metal shell blank positioned in a mold to deform the metal shell blank and press an opposite side of the metal shell blank against said mold to adopt a contour of the mold, thereby forming the outer metal shell with the desired shape,
a cut out step is provided for creating at least one opening in said outer metal shell and mounting a plastic chassis part(s) within said at least one opening and wherein and outer edge of said opening is covered by said plastic chassis part and/or said plastic chassis part is projecting beyond said outer metal shell.

More preferably, said metal shell blank has a hollow, sleeve-like or pipe-like shape and is positioned in a cavity of said mold surrounding an outer side of said metal shell blank, wherein the hydraulic pressure is applied to an inner side of the hollow metal shell blank, thereby expanding the hollow metal shell blank and pressing the metal shell blank, with an outer side, against the contour of the cavity of the mold so the outer side of the metal shell blank adopts the contour of the mold.

More preferably, one or more undercut portions of said outer metal shell are hydraulically formed in said hydraulic pressure forming step.

It is suggested to form the outer metal shell in one piece with a homogenous, integral and seamless structure having a ring-like or sleeve-like shape with annular closed cross-sections, said outer metal shell being provided with one or more undercuts. Combining such seamless one-piece annular structure with one ore more undercuts does not only provide for superior strength and rigidity, but also allows for a tight fit and small size of the metal shell although one ore more functional components are mounted into and/or onto the metal shell since the metal shell's shape may be adapted to match the contours of such functional components of the personal care device. For example, additional accommodation space for bulky portions of a functional component may be provided by one or more undercut portions of the metal shell without necessitating increased dimensions over the entire length of the metal shell. At the same time, ergonomic needs may be met by an organic shape in portions to be gripped by hand or to be in contact with the skin. In addition, a precious esthetical appearance can be combined with a cool touch feeling of the user. Due to the seamless one piece structure, accumulation of dirt is avoided and irritation of the skin due to scratching edges can be reduced. The one-piece integral structure of the outer shell refers to the handle or the function head, separately. The function head is connected with the handle by a support structure which allows moveability of the head relative to the handle, so that two outer shell's are provided for each of the head and the handle and at least one of them includes the above metal shell. Alternatively, both the head and the handle are provided with such separate metal outer shell's. Further alternatively, the function head and the handle together are provided with one metal outer shell structure as described above. The later variant is specifically applied if the head outer shell is non moveable relative to the handle outer shell.

To combine design freedom allowing complex shapes and efficient forming of the shell, the outer metal shell may be formed, at least in part, by means of hydraulic pressure deforming the metal shell into the desired shape. According to an aspect, the outer metal shell includes at least one hydraulically formed portion.

More particularly, the aforementioned one or more undercuts of the outer metal shell are formed by hydraulic pressure applied onto the shell portions desired to have such undercut shape, wherein the outer metal shell nevertheless may be formed in one piece with a homogenous, integral and seamless structure having a closed ring-like or closed sleeve-like shape.

For example, a substantially tubular, elongated outer metal shell of a handle or a hollow sleeve-like outer shell of a function head of a personal care device or another hollow outer metal shell of a personal care device accessory like a loading station may have a hydraulic pressure shaped contour with an intermediate section defining a maximum cross-sectional area and a pair of end portions arranged on opposite sides of said intermediate shell section and having smaller cross-sectional areas then said bulging intermediate section.

More particularly, forming the outer metal shell includes a hydraulic pressure forming step applying hydraulic pressure onto a side of a metal shell blank positioned in a mold to deform the metal shell blank and press an opposite side of the metal shell blank against said mold to adopt a contour of the mold, thereby forming the outer metal shell with the desired shape. Such hydraulic pressure forming step allows for deforming the metal shell blank into complex three-dimensional shapes without having the problem of getting mechanical forming tools such as punches, pushers or movable core elements out of the concavities of the metal shell.

Said hydraulic pressure forming step may be a hydroforming step, wherein the metal shell blank in the mold and/or the mold is filled with a hydraulic fluid such as water or oil, wherein pressure is applied to the hydraulic fluid from a pressure source outside the mold.

These and other advantages become apparent from the following description giving reference to the drawings and possible examples.

### BRIEF DESCRIPTION OF THE DRAWINGS

- Figure 1:: a front view of a personal care device in terms of an electric shaver including a handle including an outer metal shell and a function head in terms of a shaver head including a metal shell supporting hair cutting tools including a shear foil cutter and a long hair cutter,
- Figure 2:: a partially exploded, side view of the personal care device of Figure 1, showing front and back modules removed from the outer metal shell of the handle,
- Figure 3:: an exploded side view of the personal care device similar to Figure 2, showing the functional component assembly received inside the outer metal shell of the handle,
- Figure 4:: a partially exploded side view of the personal care device similar to Figure 3, wherein partial view (a) shows the functional component assembly to be received inside the outer metal shell of the handle and the function head in terms of the shaver head attached thereto, and partial view (b) shows the functional component assembly received inside the outer metal core with the function head attached thereto, wherein back and front modules are shown removed from the front and back sides of the outer metal core,
- Figure 5:: an exploded side view of the personal care device similar to Figure 4, wherein partial view (a) shows the functional elements assembly without the outer metal shell, wherein the function head and a bottom module connectable to said functional elements assembly are shown in positions removed from said functional element assembly, and wherein partial view (b) shows the functional elements assembly received in the outer metal shall with the connectable function head, bottom module, and front and back modules removed from the outer metal shell and the functional elements assembly,
- Figure 6:: a front view of the outer metal shell of the handle of the personal care device of the preceding Figures, wherein the outer metal shell is shown without cutouts therein to better illustrate the stretch factor,

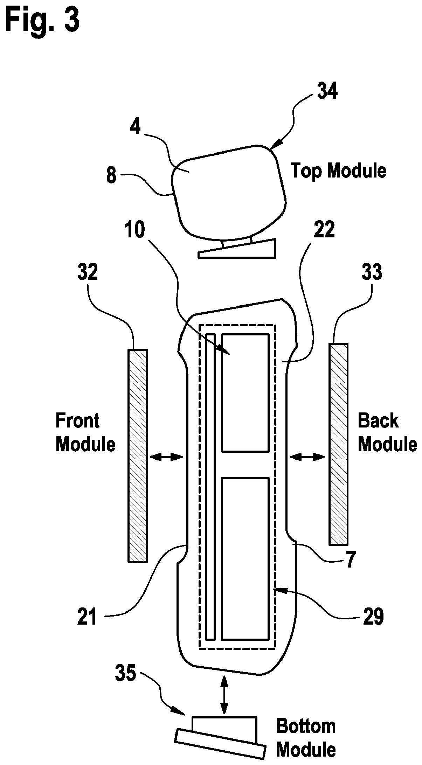

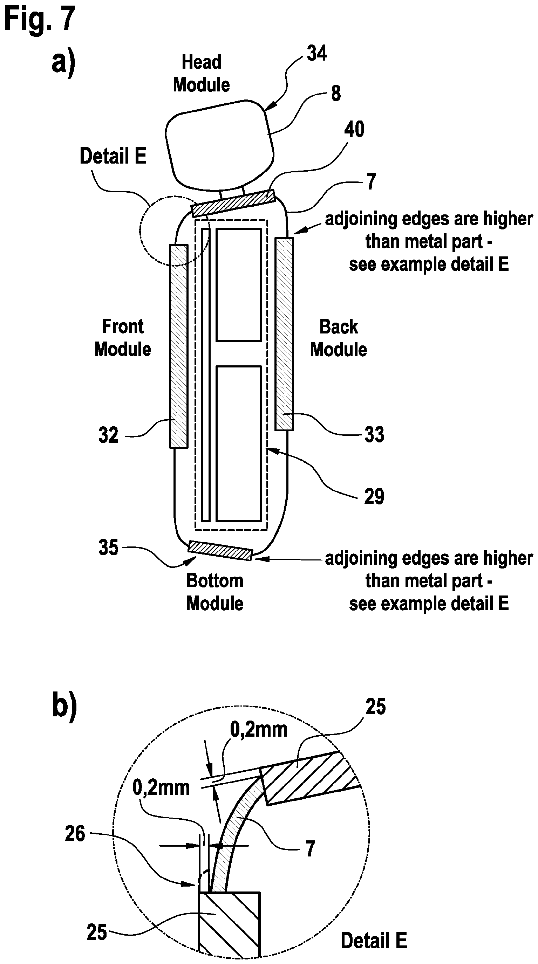

- Figure 7:: a partially cross-sectional side view of the personal care device similar to Figure 3, wherein partial view (a) shows the outer metal shell with the functional elements assembly accommodated therein and the front, back, bottom and head modules attached thereto, and wherein partial view (b) shows an enlarged cross-sectional view of the portion marked "E" of the handle of the personal care device showing the interfaces between the outer metal shell and the head module and the front module to illustrate the front and head modules having protrusions projecting beyond the outer surface of the outer metal shell,

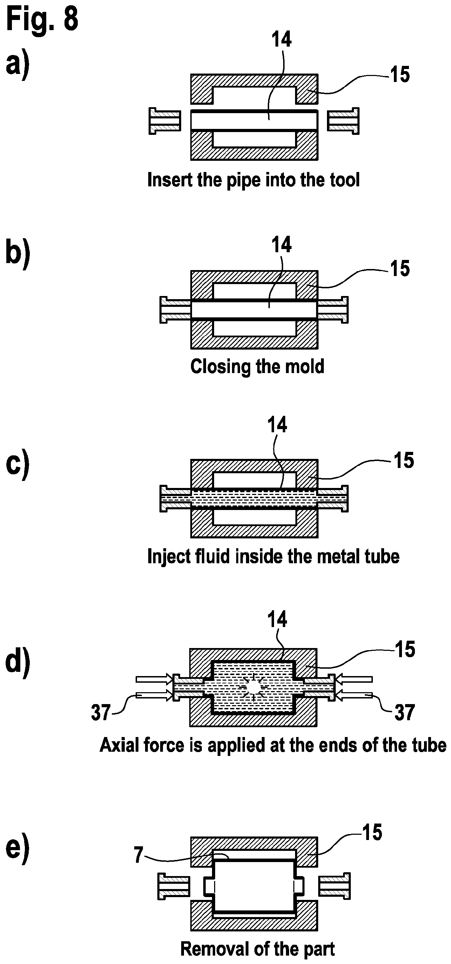

- Figure 8:: a schematic illustration of the process steps of the hydroforming of the outer metal shell of the personal care device of the preceding Figures, wherein partial view (a) shows inserting the metal shell blank into an open mold, partial view (b) shows the metal shell blank in the closed mold before applying hydraulic pressure, partial view (c) shows the tubular metal shell blank filled with hydraulic fluid immediately before hydroforming, partial view (d) shows the application of hydraulic pressure into the interior of the tubular metal shell blank into the cavity of the mold, wherein axial compression is applied to the metal shell blank during application of the hydraulic pressure, and partial view (d) shows removal of the hydroformed outer metal shell having the desired shape from the opened mold,

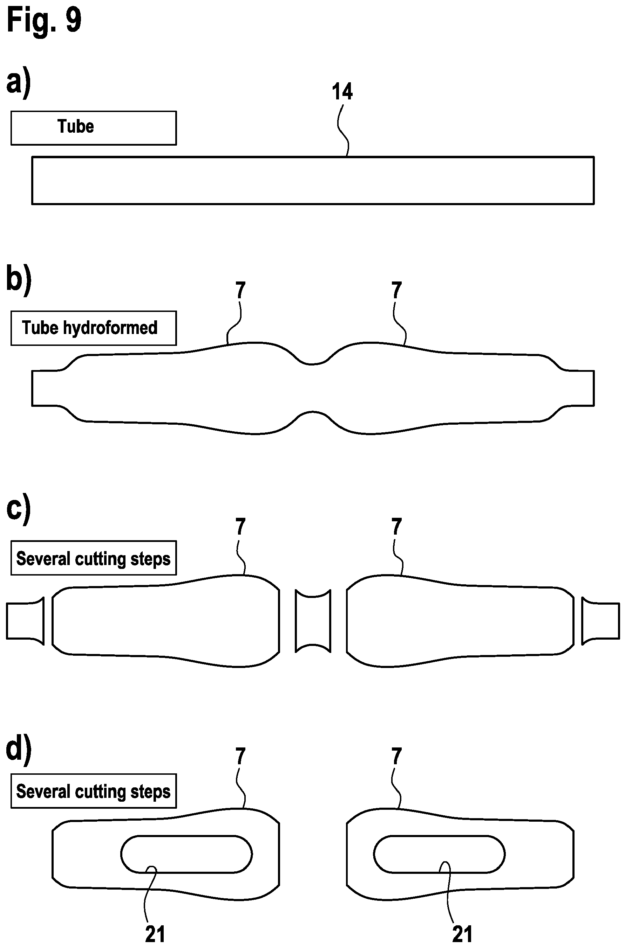

- Figure 9:: a side view of the tubular metal shell blank and the shaped metal shell, respectively, at different stages of forming the outer metal shell, wherein partial view (a) shows the undeformed tubular metal shell blank, partial view (b) shows the deformed metal shell blank after the hydroforming step, said deformed metal shell blank comprising two outer metal shells in the desired shape thereof, partial view (c) shows cutting the deformed metal shell of step (b) into several parts including two outer metal shells, and partial view (d) shows the obtained two outer metal shells with lateral cutouts,
- Figure 10:: a cross-sectional view of the outer metal shell of Figure 9, illustrating the lateral cutout, wherein partial view (a) shows the lateral cutout having a sharp edge and partial view (b) shows the cutout having a three-dimensional edge extending perpedendicular to the outer surface of the three-dimensionally shaped metal shell section surrounding the cutout,
- Figure 11:: a cross-sectional view of the function head of the personal care device of the preceding Figures, wherein a functional plastic chassis including functional elements such as cutting elements and a driving module is received inside an outer metal shell of the function head,
- Figure 12:: a cross-sectional view of the function head similar to Figure 11, showing the interfaces between the functional chassis element and the outer metal shell of the function head,
- Figure 13:: an enlarged cross-sectional view of the region marked "A" of the function head of Figure 12, illustrating the plastic chassis element having a protrusion projecting beyond the outer surface of the outer metal shell of the function head,
- Figure 14:: an illustration of the machinery for forming the outer metal shell of the personal care device of the preceding Figures by means of electrohydraulic forming, and
- Figure 15:: an illustration of the machinery for forming the outer metal shell of the personal care device of the preceding Figures by means of electromagnetic forming.

### DETAILED DESCRIPTION OF THE INVENTION

According to an aspect, it is suggested to form the outer metal shell in one piece with a homogenous, integral and seamless structure having a ring-like or sleeve-like shape with annular closed cross-sections, said outer metal shell being provided with one or more undercuts. Combining such seamless one-piece annular structure with one or more undercuts does not only provide for superior strength and rigidity, but also allows for a tight fit and small size of the metal shell although one or more functional components are mounted into and/or onto the metal shell since the metal shell's shape may be adapted to match the contours of such functional components of the personal care device. For example, additional accommodation space for bulky portions of a functional component may be provided by one or more undercut portions of the metal shell without necessitating increased dimensions over the entire length of the metal shell. At the same time, ergonomic needs may be met by an organic shape in portions to be gripped by hand or to be in contact with the skin. In addition, a precious esthetical appearance can be combined with a cool touch feeling of the user. Due to the seamless one piece structure, accumulation of dirt is avoided and irritation of the skin due to scratching edges can be reduced.

To combine design freedom allowing complex shapes and efficient forming of the shell, the outer metal shell may be formed, at least in part, by means of hydraulic pressure deforming the metal shell into the desired shape. According to an aspect, the outer metal shell includes at least one hydraulically formed portion.

More particularly, the aforementioned one or more undercuts of the outer metal shell may be hydraulically formed portions, wherein the outer metal shell nevertheless may be formed in one piece with a homogenous, integral and seamless structure having a closed ring-like or closed sleeve-like shape.

For example, a substantially tubular, elongated outer metal shell of a handle or a hollow sleeve-like outer shell of a function head of a personal care device or another hollow outer metal shell of a personal care device accessory like a loading station may have a hydraulic pressure shaped contour with an intermediate section defining a maximum cross-sectional area and a pair of end portions arranged on opposite sides of said intermediate shell section and having smaller cross-sectional areas then said bulging intermediate section.

More particularly, forming the outer metal shell may include a hydraulic pressure forming step applying hydraulic pressure onto a side of a metal shell blank positioned in a mold to deform the metal shell blank and press an opposite side of the metal shell blank against said mold to adopt a contour of the mold, thereby forming the outer metal shell with the desired shape. Such hydraulic pressure forming step allows for deforming the metal shell blank into complex three-dimensional shapes without having the problem of getting mechanical forming tools such as punches, pusher or movable core elements out of the concavities of the metal shell.

For example, the aformentioned outer metal shell having an intermediate bulging section defining a maximum cross-sectional area and a pair of end portions arranged on opposite sides of said intermediate shell section and having smaller cross-sectional areas then said bulging intermediate section, may be hydraulically formed.

Another example of undercut shapes of the outer metal shell may include a substantially hemispherical concavity or bowl-like bulb portion closed to the outside of the shell and open to the interior thereof. Also plateau-like elevations of the outer side forming, for example a finger gripping portion or a support portion for an add-on element, may be formed open to the interior side of the metal shell in an undercut way.

As mentioned before, the outer metal shell may have a one-piece structure. More particularly, the metal shell may be formed in one integral piece with a homogeneous seamless structure, wherein the outer metal shell may have a ring-like or sleeve-like shape with closed annular cross-sections. Nevertheless, the ring-like or sleeve-like outer metal shell may have one or more lateral openings or lateral cutouts, wherein in the region of such cutouts there is of course no closed annular cross-section. However, the outer metal shell may be formed to have an annular cross-section with a closed ring-shape at least at opposite end portions of the outer metal shell, and/or at opposite sides of a lateral opening. Those axial end portions of the outer metal shell may, when considering the outer metal shell of the handle of the personal care device, face and support the function head of the personal care device on the one hand and may form the bottom end of the handle on the other hand. When considering the function head, the opposite end portions of the outer metal shell may, on the one hand, face the handle and on the other hand, may support the personal care treatment tools and/or may surround or neighboring the skin contact surface of the function head.

Such closed annular cross-sections at the end portions may provide for rigidity of the housing or frame, in particular a strong and rigid support for the functional elements mounted in and onto the outer metal shell. Nevertheless, the axial end sides of the metal shell themselves may be provided with openings which may be surrounded by said annular portions having closed annular cross-sections. For example, the support structure for supporting the function head is usually attached to or supported on one of the axial end portions of the handle so providing such end portion of the outer metal shell with a closed annular cross-section helps in supporting the function head rigidly.

Forming the outer metal shell by means of hydraulic pressure may be utilized to shape the substantially sleeve-like or ring-like outer metal shell to have laterally bulging portions with an increased diameter or an increased transverse extension, and various other sections of the outer metal shell to form undercuts, without having the problem to get out the punching elements or movable core elements known from mechanical die systems. Forming such undercuts by means of hydraulic pressure applied to the interior surface of the sleeve-like outer metal shell is no problem since the hydraulic fluid easily may be drained from the interior of the metal shell.

More particularly, the outer metal shell may have tapering end portions at both axial ends of the outer metal shell and/or for a radially or laterally bulging intermediate shell section defining a maximum cross-sectional area of the outer metal shell. In particular, the diameter, or the transverse extension in case of non-circular or substantially rectangular or other non-uniform cross-sections, may get smaller to the axial end portions and/or may increase in one or more intermediate sections between the end portions. For example, the outer metal shell may form an elongated, sort of streamlined stick having a maximum thickness in a middle portion and tapering towards the end portions, or may have a substantially egg-shaped configuration.

Other shapes with undercuts also may be desired. For example, it may be desirable to have at one lateral side of the outer metal shell, for example in a middle section, a bulging or elevated, plateau-like section so as to have additional space in the interior of the outer metal shell for accommodating a special functional element or, e.g., for arranging an input switch or a touch display at a laterally elevated position on the outer side of the metal shell. Another option is an elongated handle of organic contour having an outer side ergonomically adapted to the fingers and the palm of a closed hand.

Irrespective of the details of the shape of the outer metal shape, a metal shell blank having a hollow, sleeve-like or pipe-like shape may be positioned in a cavity of the mold which surrounds an outer side of the hollow metal shell blank, wherein the hydraulic pressure may be applied to an inner side of the hollow metal shell blank, thereby expanding the hollow metal shell blank and pressing the metal shell blank, with an outer side thereof, against the contour of the cavity of the mold so the outer side of the metal shell blank adopts the contour of the mold cavity.

Said hydraulic pressure forming step may be a hydroforming step, wherein the metal shell blank in the mold and/or the mold is filled with a hydraulic fluid such as water or oil, wherein pressure is applied to the hydraulic fluid from a pressure source outside the mold.

In addition to or in the alternative to such hydroforming step, an electro-hydraulic forming step may be provided, wherein the metal shell blank is positioned in a hydraulic fluid reservoir and/or submerged into the hydraulic fluid in which one or more pressure waves are generated by means of at least one pair of electrodes, said one or more pressure waves forming the metal shell blank into the desired shape of the outer metal shell. More particularly, such pressure waves may deform the metal shell blank in a mold to press the metal shell blank against a mold contour to adopt such mold contour.

In addition or in the alternative to such hydroforming or electro-hydraulic forming step, the metal shell blank also may be deformed by electro-magnetic forming, wherein a metal shell blank made of a magnetically responsive material may be used and may be subject to a magnetic field that may be generated by an electro-magnetic device. More particularly, a magnetic field may be applied to the metal shell blank to transform said metal sheet blank into a viscoplastic state and to deform the metal shell blank to adopt a mold contour. Such electro-magnetic forming allows forming of complex shapes at high speeds in cold conditions.

When forming such expanded cross-sectional portions or radially bulging portions by applying hydraulic pressure onto the inner side of the metal shell, it may help to apply axial compression onto the metal shell blank, wherein such axial compression may be applied before and/or during and/or after the application of the hydraulic pressure. More particularly, such axial compression may help in pushing the material of the metal shell blank axially into the mold, thereby facilitating radial expansion of the metal shell blank, which axial expansion may be mainly achieved by the hydraulic pressure. Nevertheless, when the metal shell blank is radially expanded, axial compression helps the material to yield and provides for a sort of fresh supply of material to compensate for the radially expanding material.

So as to achieve such axial compression, an axial force may be applied to one axial end or to both axial ends of the metal shell blank, in particular to the end portion or end portions where hydraulic fluid or hydraulic pressure is supplied into the mold and/or into the sleeve-like or tubular metal shell blank. For example, a pair of pusher elements that may be arranged coaxial to each other, may push in opposite directions onto the opposite ends of the metal shell blank received in the mold so as to apply the axial compression. Such axial compression may be applied to the metal shell blank particularly during the application of the hydraulic pressure, at least partially overlapping with the period of hydraulic pressure forming.

The hydraulic pressure-forming step may be configured to produce more than one outer metal shell at the same time or in one hydraulic pressure-forming step. For example, a substantially tubular or sleeve-like metal shell blank with a length larger than the sum of lengths of two or more metal shells may be used, wherein such sufficiently long metal shell blank may be deformed in the hydraulic pressure-forming step to form, e.g., two outer metal shells with the desired shape which are still connected to each other immediately after the hydraulic pressure-forming step. The metal shell blank is deformed into a sort of row of outer metal shells connected to each other and arranged in a row one after the other. The plurality of formed shells may be arranged, with their main axes, coaxially to each other. In a subsequent cutting or separation step, the metal shells formed by hydraulic pressure may be separated from each other, e.g. by means of cutting the connection portion between two neighboring metal shells.

In particular, a pair of outer metal shells may be formed in one hydraulic pressure-forming step such that the metal shells have on orientation opposite to each other. For example, when the desired shape of the outer metal shell is a substantial egg shape, the two eggs may be formed in the mold by hydraulic pressure-forming such that the thicker ends of the eggs face each other and the thinner ends of the eggs face away from each other. Such opposite orientation of the pairs of metal shells to be formed, helps in achieving a uniform deformation of the material and uniform yielding of the material in the sections with large radial expansion.

As mentioned, the hydraulic pressure-forming step may be a hydroforming step. In the alternative, the hydraulic pressure-forming step may include electrohydraulic forming, wherein a shock wave or pressure wave is generated in the hydraulic fluid by means of at least one pair of electrodes to which electrical current is applied so a sort of explosion in the fluid is generated by the current. Such pressure wave going through the hydraulic pressure hits onto a surface of the metal shell blank, thereby causing deformation thereof. In particular, the metal shell blank may be pressed by such pressure wave against the wall of a mold in which the metal shell blank is received, substantially similar to the aforementioned hydroforming process.

In the alternative to hydroforming and electrohydraulic forming, the metal shell blank also may be deformed into the desired shape of the metal shell by means of electromagnetic forming which is sometimes known as EMF. For such EMF forming step, a metal shell blank is used which is made of a metal responsive to magnetic forces. On the other hand, for hydroforming or electrohydraulic forming, also other materials not responsive to magnetic forces can be used.

For example, aluminum shells may be used, or other materials such as brass, low-alloy steel and stainless steel may be used as metal shell blanks.

A particularly advantageous material for the outer metal shell is stainless steel which may include chromium, nickel and molybdenum. More particularly, the steel may include 10-25 mass% Cr, 5-20 mass% Ni and 1-5 mass% Mo or 16-18 mass% Cr, 10-14 mass% Ni and 2-3 mass% Mo.

For example, stainless steel of the type 1.4301 may be used or stainless steel 1.4404 may be used which provides for even further increased corrosion resistance.

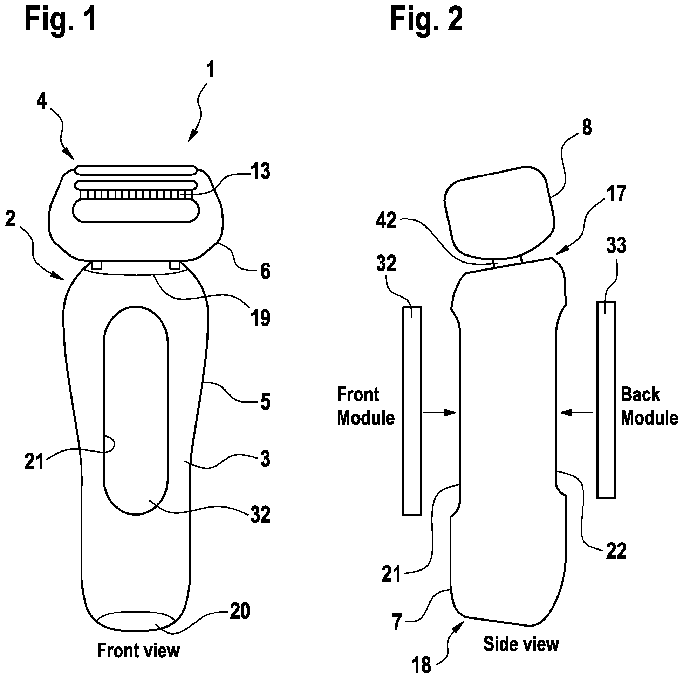

As can be seen from Figures 1 and 2, the handheld personal care device 1 may be an electric shaver 2 comprising an elongated handle 3 and a function head 4 attached to one end of said handle 3, wherein said function head 4 may be a shaver head. The function head may form a separate part with separate housing shell relative to the handle and supporting arms 42 are provided connecting both the function head with the handle allowing to movably (e.g. to allow swivel and/or tilt movement) or non moveably support the function head on the handle. Alternatively, the function head may be integral part of the handle, forming the top end of the device and both may be provided with an integral outer shell.

The function head 4 may include one or more functional components to perform or help to perform the personal care treatment. In case of a shaver head, the functional components of the function head 4 may include one or more cutting tools 13 which may include one or more of each a shear foil short hair cutter and/or a long hair cutter and/or a trimmer. The treatment tools may protrude from one side of the body of the function head 4 to define a skin contact surface.

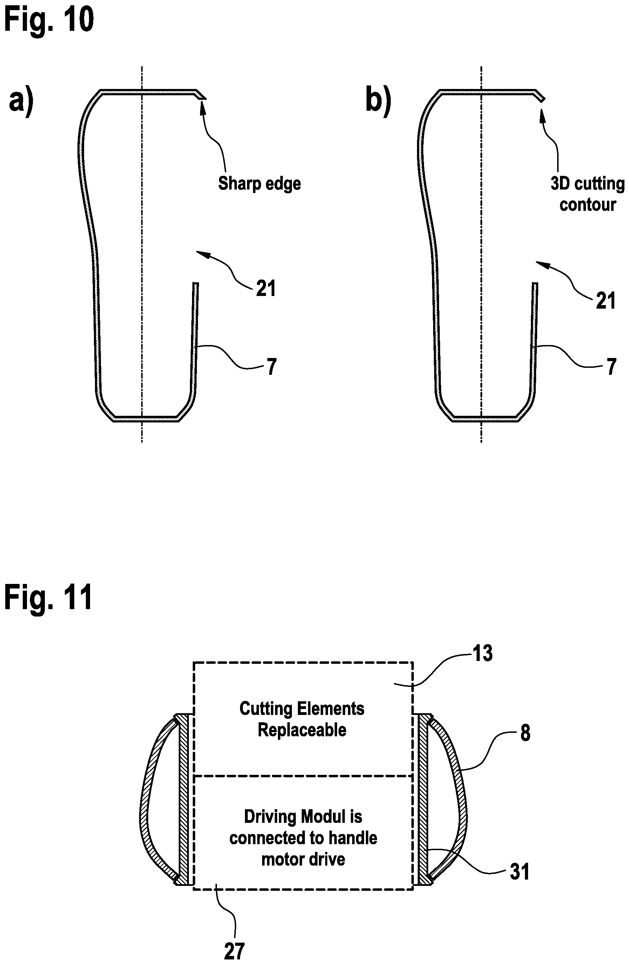

As can be seen from Figure 11, the cutting tool 13 can be replaceable and thus, removably supported by a frame of the function head 4.

So as to activate and/or drive the treatment tools, a drive module may be received in the function head 4, wherein such drive module 27 may include an electric motor or, in the alternative, a transmitter or a coupling for coupling to another portion of the transmitter 12 coming from the handle 3.

The aforementioned functional components 9 of the function head 4 may be accommodated, at least partly, inside a housing 6 of the function head 4, wherein said housing 6 may include a metal shell 8 which is described in detail below.

The elongated handle 3 serves the purpose of gripping and holding the personal care device 1, wherein the outer peripheral surface of the handle 3 may be gripped by hand or by the fingers of a hand. In addition to such gripping function, the handle 3 also serves the purpose to accommodate further functional components 9 of the personal care device 1, wherein the functional components 9 of the handle 3 may include a drive unit 10 for driving the treatment tools 13 at the function head 4. More particularly, the drive unit 10 may include a motor 11 which may be driven by electric energy supplied by a battery 28 or via a net cable connected to a supply terminal.

The elongate handle 3 comprises a top end portion 17 adjacent to the functional head 4 and at the opposite side a bottom end portion 18. Each one of those end portions may be provided with frontal openings 17, 18. In an alternative, the outer shell 7 may be provided without an opening at the bottom end portion 18. At the lateral sides of the outer shell 7 at least one lateral opening 21, 22 is provided for accommodating therein a front and or back module 32, 33. Thus, each opening within the outer shell 7 is closed during assembly by a cap or module 32, 33, 35, 40 preferably made at least in part from plastic.

To control the action of the motor 11, the handle 3 may include a control unit which may include electronic components such as an electronic controller. More particularly, the control unit may include a printed circuit board or PCB to which the motor 11 is connected, wherein on the other hand input/control means such as a control switch, a touch screen or other control elements may be connected to the PCB 30 or, more generally, to the electronic control unit.

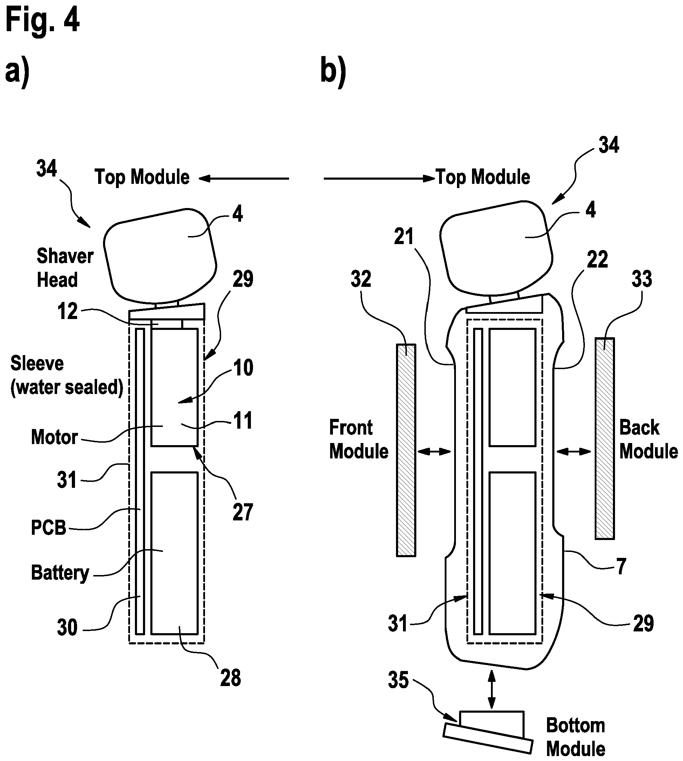

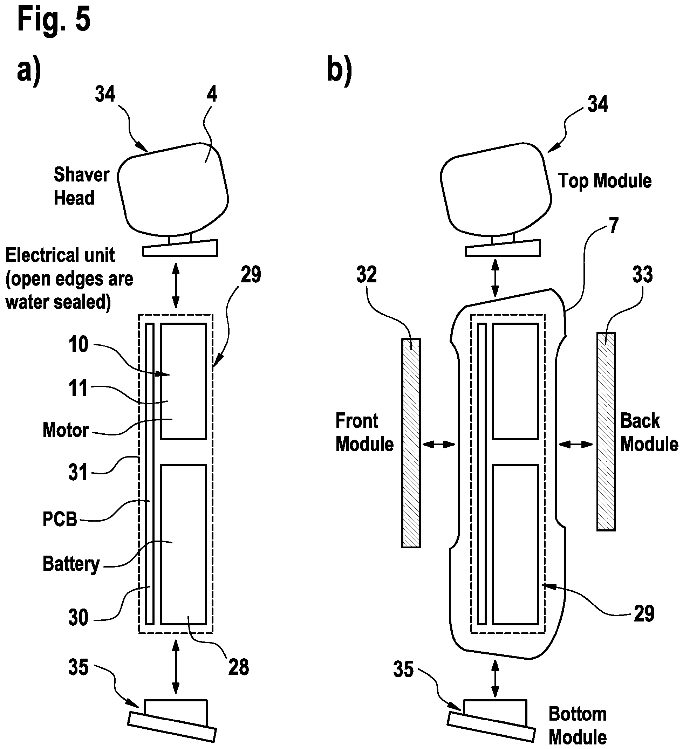

As can be seen from Figures 3 to 5, the elongated handle 3 may comprise a substantial hollow housing 5 in which the aforementioned function components 9 may be received and accommodated. Said housing 5 of the handle 3 may include a metal shell 7 forming, at least in part, the outer surface of the handle 3.

The functional components 9 received in the handle 3 may be preassembled to form a preassembled mounting unit. For example, the functional elements 9 may be premounted to a chassis element 31 which may be, at least in part, made from plastic, for example. The aforementioned chassis element 31 also may include the aforementioned printed circuit board 30 to which other elements like the motor, the battery or control switches or displays may be mounted or connected.

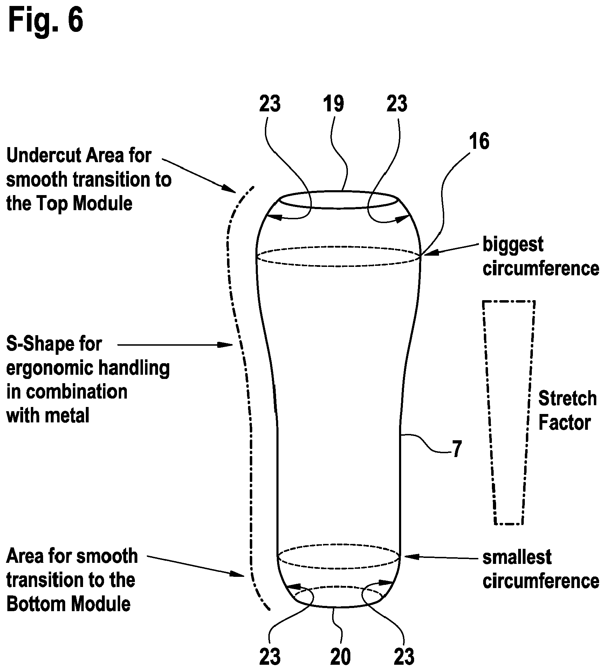

As illustrated by Figures 3 to 5, the functional elements 9 may be differently grouped into preassembled mounting modules. According to an advantageous aspect, the personal care device 1 may be configured to have an elongated inner functional module 29 which may be inserted into the handle 3 via an opening in one of the axial ends of the housing 5. For example, an axial top end portion of the handle 3 facing the function head 4 may be provided with a frontal end opening 19, cf. Figure 6, through which the elongated inner functional module 29 may be inserted into the handle 3. The elongated inner functional module 29 may include, e.g., the motor 11, the battery 28, the electronic control unit for controlling the motor 11, which control unit may include the printed circuit board 30. The inner functional module 29 may have a sealing or a sealed configuration protecting the electronic components and also the motor and battery against moisture and water.

The inner functional module 29 also may include a transmitter 12 for transmitting the driving motion of the motor 11 to the treatment tools 13 at the function head 4, wherein a part of the transmitter 12 may project from an axial top end portion of the handle 3 into or towards the function head 4.

As can be seen from Figures 3 to 5, front and/or back modules 32, 33 may be mounted on lateral sides of the handle 3, wherein also such front module 32 and/or back module 33 may be connected to the interior functional components 9 received in the interior of the handle 3. To allow connection of the front module 32 and the back module 33 to the internal components, the housing 5 of the handle 3 and more particularly, the outer metal shell 7 thereof, may be provided with lateral cutouts or openings 21, 22 in or through which the front and back modules 32, 33 may extend at least partly.

The front and back modules 32, 33 may include electronic and/or electrical components and/or mechanical components and/or tools, wherein the front and back modules 32, 33 may include portions made from plastic and/or portions made from other materials than metal, such as glass, wherein nevertheless some other portions may be formed from metal. For example, the front module 32 may include a display such as a touch display for inputting control commands and/or displaying control information such as, e.g., treatment time or battery charge status. In addition or in the alternative, the front module 32 also may include control elements such as a control switch and/or an output element such as a sound generator or loudspeaker.

The back module 33 may include, e.g., a battery module which may be configured exchangeable. Such additional battery module may be provided in addition to the battery 28 received inside the handle 3 so as to, e.g., have a range extender, or it may replace the battery 28 inside the handle 3. In addition or in the alternative, the back module 33 may include other functional components 9 such as a special treatment tool 13. In case of a shaver 2 or hair cutter, such special treatment tool 13 may include a long hair cutter.

As can be seen from Figures 3 to 5, a bottom module 35 may be attached to the handle 3 at an axial end portion opposite to the function head 4, wherein the handle 3, more particularly the housing 5 thereof and more particularly the metal shell 7 of the handle's housing 5 may be provided with a frontal opening 19 into which the bottom module 35 may be inserted at least partly. Such bottom module 35 may be made, at least partly, from plastics and/or may include electronic components such as a connection terminal for connecting a supply cable and/or connecting the charger pins or charging connectors of a charger station. The bottom module 35 also may include data connection terminals to connect the personal care device 1 to a data sending/receiver station.

A top module 34 may be formed by the aforementioned function head 4, wherein such top module 34 may be permanently or removably attached to the top end portion of the handle 3. More particularly, a base portion of the top module 34 which may support a body and/or the functional components 9 of the function head 4, may be inserted, at least in part, into the hollow housing 5 of handle 3 and/or may be attached to the axial end portion of the handle 3. More particularly, said base portion of the top module 34 may be attached to the metal shell 6 of the handle 3 to connect the functional components 9 of the function head 4 to the functional components 9 of the handle 3. The top module 34 may be rigidly attached to the metal shell 7 of the handle 3, wherein such rigid attachment may be fixed or releasable, cf. Figure 3, Figure 4 and Figure 5.

As can be seen from Figure 7, at least one of the aforementioned functional modules 29, 32 to 35 may be inserted into the respective cutout or opening 19, 20 or 21 in the metal shell 7 or handle 3 such that the at least one module 29, 32 to 35 extends partly inside and partly outside the housing 5 of handle 3 and more particularly partly inside and partly outside the metal shell 7. More particularly, at least one of the modules 29, 32 to 35 may be configured to have a protrusion 25 which extends through the corresponding opening 19, 20, 21 in the metal shell 7 with an outer portion of the protrusion 25 projecting beyond an outer surface of the metal shell 7 towards the outside of handle 3, cf. partial view (b) of Figure 7.

For example, at the interface between the metal shell 7 and the function module, said protrusion 25 may project beyond the outer surface of the metal shell 7 by an amount ranging from 0.05 to 1 mm or 0.1 to 0.5 mm or 0.1 to 0.3 mm. Such projection forms a sort of protector which protects skin and fingers from contacting the edges of the openings, 19, 20 and 21.

Nevertheless, in the alternative, the functional modules 29, 32 to 35 may be inserted into the corresponding openings 19, 20, 21 in a flush way so the aforementioned amount of projection would be substantially zero, wherein it also would be possible to have a slight negative projection of, e.g., -0.1 to -0.5 mm.

As can be seen from Figure 7 (b), the at least one functional module 29, 32 to 35 may tightly fit into the corresponding opening 19, 20 and 21, wherein the outer peripheral surface of the module 32 to 35 may match the corresponding opening 19, 20, 21 in terms of shape and dimension. More particularly, the aforementioned protrusion 25 extending through the opening may have a peripheral shape adapted to the contour of the respective opening 19, 20, 21 to achieve a tight fit or allow sealing therebetween.

As can be seen from Figure 7 (b), the protrusion 25 may have a basically cylindrical shape so the outer portion of the protrusion 25 may extend substantially perpendicular or transverse to the outer surface of the metal shell 7. In the alternative, the protrusion 25 may include a collar 26 having a slightly larger diameter or dimension or extension than the protrusion's portion sitting in the opening 19, 20, 21. Such collar 26 may be seated onto the outer surface of the metal shell 7.

The aforementioned protrusion 25 of the respective functional module 29, 32 to 35 which is seated into the corresponding opening 19, 20 and 21 may be formed from plastic at least in part, wherein such plastic may be hard plastic or soft plastic or a mixture thereof to combine, e.g., snap-fitting the respective module into the corresponding opening with sealing the interface between the metal shell 7 and the attached module.

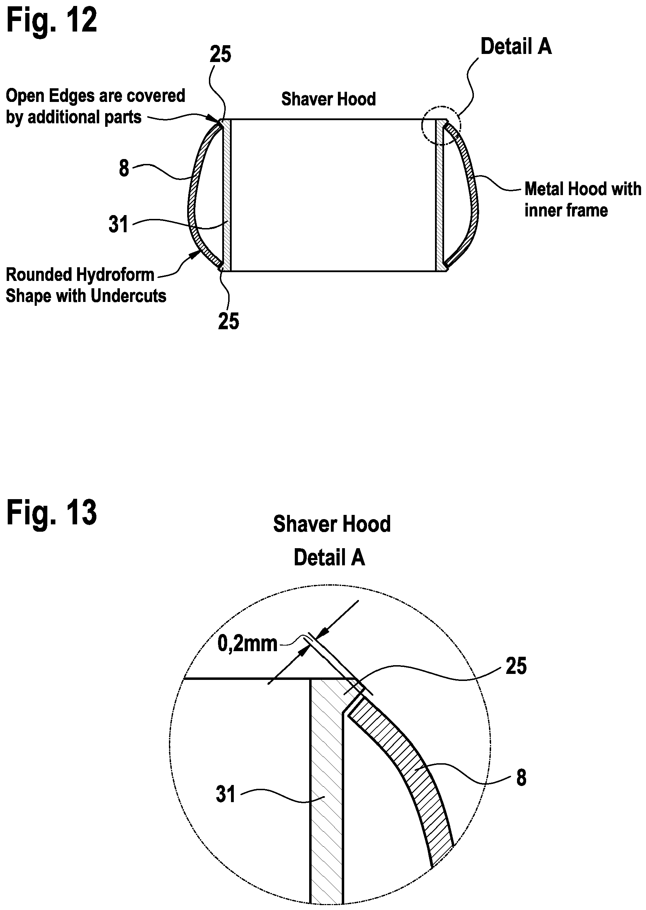

As can be seen from Figures 11 to 13, the function head 4 may have a similar configuration of the function head housing 6 and the functional modules or functional components 9 attached thereo. More particularly, the functional components or groups of components 9 may be inserted into the interior of the housing 6 of function head 4 at least in part. More particularly, the functional components 9 may include a protrusion 25 which projects beyond an outer surface of the metal shell 8 of the head's housing 6 to the outside thereof, wherein the amount of projection, cf. Figure 13, may range from 0.05 to 1 mm or 0.1 to 0.5 mm or 0.1 to 0.3 mm. Again, as described for the functional modules of the handle 3, no difference in height to achieve a flush configuration or a negative difference in height basically would be possible.

The protrusion 25 of the chassis element attached to the function head 4 also may be formed from plastics at least in part, wherein such plastic may be hard plastic and/or soft plastic to achieve snap-fitting and/or sealing.

The metal shell 7 of the handle 3 and/or the metal shell 8 of the function head 4 may be hydroformed. More particularly, manufacturing of the metal shell 7, 8 may include a hydro-forming step which includes application of high pressure hydraulic fluid onto an inner surface of a metal shell blank 14, as it is illustrated in greater detail in figures 8 and 9.

Referring to figure 8, the metal shell blank 14 which initially may have a tubular shape, is inserted into an open mold 15 which may define, when closed, a cavity corresponding to the desired shape of the outer side of the metal shell 7, 8. As can be seen from figure 8a, the metal shell blank 14 may be inserted such that opposite end portions of the tubular blank 14 reach opposite edge portions of the mold 15 at the interface of two mold parts. The end portions of the tubular metal shell blank 14 should be accessible from outside the mold 15 to allow supply of hydraulic fluid into the interior of the tubular metal shell blank 14. In addition, pusher elements 37 should be able to contact the opposite end portions of the tubular metal shell blank 14 to apply axial compression thereto.

When closing the mold 15, cf. figure 8b, and connecting the fluid supply connectors to the end portions of the tubular metal shell blank 14 and/or positioning the pusher elements 37 at said end portions of the tubular metal shell blank 14, hydraulic fluid is injected into the interior of the tubular metal shell blank 14 via the open axial ends thereof, cf. figure 8c to completely fill the interior of the metal shell blank 14, cf. figure 8c.

Hydraulic pressure is then increased to achieve deformation of the metal shell blank 14 and more particularly, radial expansion thereof so as to press the metal shell blank 14 against the mold surfaces defining the cavity of the mold 15 so the metal shell blank 14 may adopt the shape of the mold cavity, cf. figure 8d.

Before and/or during and/or after radial expansion of the metal shell blank 14 due to hydraulic pressure, the aforementioned pushers 37 may be activated to apply axial compression onto the metal shell blank 14. More particularly, the pusher elements 37 may be pressed against the opposite end portions of the tubular metal shell blank 14, cf. figure 8d to support the desired deformation of the material of the metal shell blank 14.

The axial compression may be applied when the metal shell blank 14 is in the mold 15.

Figure 9a and b illustrate the transition and deformation of the metal shell blank 14 into the outer metal shell 7, 8 having the desired shape. According to an advantageous aspect, a pair of metal shells 7, 8 may be formed in one hydro-forming or hydraulic pressure forming step, cf. figure 9b, wherein the mold 15 may be configured to achieve hydro-forming or hydraulic pressure forming of a pair of outer metal shells 7, 8 oriented opposite to each other. As can be seen from figure 9b, for example, the two metal shells 7, 8 may face each other with their thicker end portions, whereas the thinner end portions may face away from each other, wherein the two metal shells may be arranged, with their main axes, substantially coaxially to each other.

After the hydro-forming step, the metal shell or pair of metal shells may be removed from the mold to effect one or more cutting steps. In particular, axial end portions of the formed metal shell 7, 8 may be cut-off, cf. figure 9c. Such cutting step may include different cutting techniques such as laser cutting, sawing and/or milling.

As becomes apparent from figure 9c, the aforementioned frontal openings 19, 20 at the axial end portions of the metal shell 7, 8 are made by means of such cutting the end portions.

As illustrated by figure 9d, also one or more lateral openings 21 may be cut into the metal shell 7, 8 to allow for mounting the aforementioned front and back modules 32, 33. As an aside, it should be noted that also other lateral openings can be cut into the lateral sides of the outer metal shell 7, 8. For example, perforations may be cut or drilled to allow for visual contact to components inside the metal shell such as a display or LEDs etc.

As illustrated by figure 10, the openings 19, 20, 21 or cut-outs can be performed in different ways and by different cutting technologies. For example, as shown by figure 10a, the openings may have a sharp edge and/or an edge contour having a substantial cylindrical configuration in terms of a parallel extension of all sections of the cut-out edge. Such configuration may be achieved, for example, by drilling a hole or moving another cutting tool like a saw or a milling tool in a fixed orientation relative to the metal shell 7, 8. For example, the metal shell 7, 8 may be fixedly held in a horizontal orientation, whereas the milling tool is fixedly held in a vertical orientation and moved in a horizontal plane to effect machining of the desired cut-out contour.

In the alternative, as illustrated by figure 10b, the opening or cut-out may be manufactured by means of 3D-cutting, wherein the orientation of the cutting tool is adjusted or varied along the displacement path of the cutting tool so the edge of the obtained opening has different orientation in different sectors of the opening.

More particularly, such 3D-cutting may be configured to adjust the orientation of the cutting tool to the inclination and/or orientation and/or slope of the outer surface of the metal shell section in which the cut is made. More particularly, the orientation of the 3D-cutting tool can be adjusted such that the edge of the obtained opening is substantially perpendicular to the outer surface of the metal shell neighboring to or encompassing the opening, cf. figure 10b, wherein such outer surface neighboring the opening may change its orientation along the opening and/or may have a curved shape such as a barrel-shape or may have a multi-axially curved contour.

For example, such 3D-cutting may include laser cutting with a laser cutter that can be pivoted about two or three axes, wherein translatoric displacement of the laser being relative to the metal shell may be achieved by translation of the fixture holding the metal shell during the cutting process and/or translation of the laser cutter. It also would be possible to pivot the fixture holding the metal shell to achieve 3D-cutting and to adapt the orientation of the laser being relative to the slope or orientation of the metal shell surface.

Such 3D-cutting also may use other cutting techniques such as milling or water jet cutting.

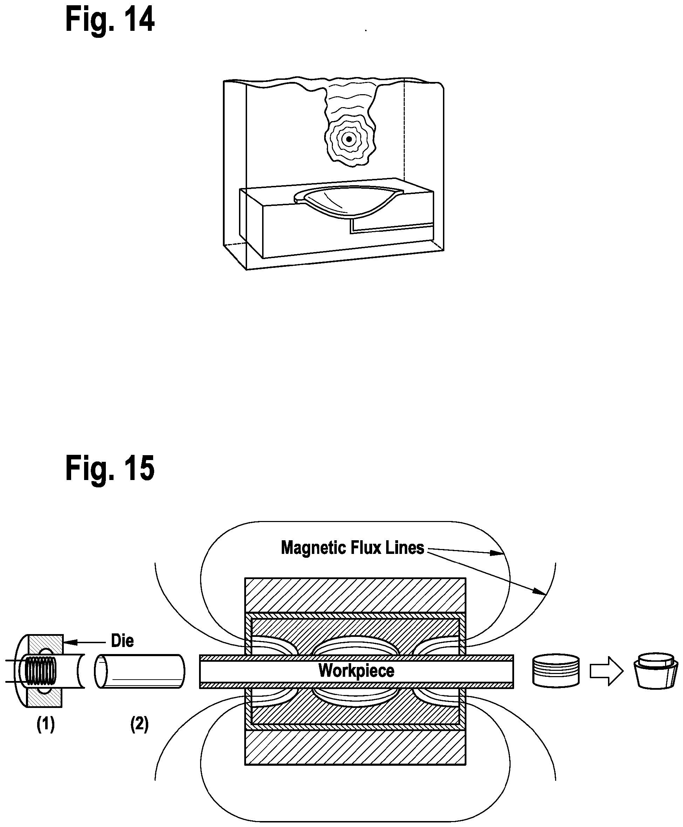

As can be seen from figure 14, the hydraulic pressure forming step for forming the metal shell 7, 8 also may include electro-hydraulic forming which is sometimes known as EHF. Such electro-hydraulic forming is based on ultra high speed deformation of the metal shell blank using shock waves or pressure waves in hydraulic fluid such as water. Via discharging current, an electric arc may be generated in water between at least one pair or electrodes. Such electric arc vaporizes the surrounding water and/or hydraulic fluid, converting electrical energy into a high pressure wave of mechanical energy. Such shock wave may simultaneously transform the metal shell blank 14 into a viscoplastic state and press and/or accelerate the metal shell blank 14 onto the surface of the mold's cavity, thereby forming the desired shape at high speeds in cold conditions. Such electro-hydraulic forming is particularly able to form complex shapes.

As illustrated by figure 15, the forming step for forming the outer metal shell 7, 8 into the desired shape, also may use electro-magnetic forming known as EMF. Such electro-magnetic forming is based on the ultra high speed deformation of metal using a magnetic field. Via discharging current in a coil for example, a magnetic field may be generated which may simultaneously transform the metal shell blank into a viscoplastic state and press/accelerate the metal shell blank onto the surface of the mold cavity, thereby forming the metal shell into the desired shape at high speeds in cold conditions. Also, such electro-magnetic forming is able to form complex shapes.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. Personal care device such as hair cutter or tooth brush, comprising a handle (3) and a function head (4) supporting at least one personal care tool, said function head (4) being attached to said handle (3), wherein at least one of said handle (3) and said function head (4) includes an outer metal shell (7, 8), said metal shell (7, 8) having at least one opening (19, 20, 21) wherein at least one plastic chassis member (31, 32, 33, 35, 40) is accommodated in said outer metal shell (7, 8), **characterized in that** said plastic chassis member (31, 32, 33, 35, 40) having a protrusion (25) through said opening (19, 20, 21, 22) in said outer metal shell (7, 8) and projecting beyond an outer surface of a metal shell section surrounding said opening (19, 20, 21, 22) and/or said plastic chassis member is fully covering an outer edge of said openings (19, 20, 21, 22).

2. Personal care device according to claim 1, wherein said outer metal shell (7, 8) includes at least one lateral opening (21, 22) through which a functional component (9) at least partly extending to and/or accessible from an outside of the outer metal shell (7, 8) is connected to another functional component (9) accommodated inside said outer metal shell (7, 8).

3. Personal care device according to anyone of the preceding claims, wherein the handle is provided with a front module and a back module at opposing lateral sides thereof each module being provided with said plastic chassis member extending through corresponding openings of said outer metal shell (7).

4. Personal care device according to anyone of the preceding claims, wherein the handle is provided with a top module and a bottom module at opposing longitudinal sides thereof each module being provided with said plastic chassis member extending through corresponding openings of said outer metal shell (7).

5. Personal care device according to anyone of the preceding claims, wherein said function head (4) is provided with said plastic chassis member (31) extending through a bottom opening and a top opening of said function head (4).

6. Personal care device according to one of the preceding claims, wherein said protrusion (25) includes a collar (26) overlapping said opening (19, 20, 21, 22) and/or seated onto said outer surface of said metal shell section surrounding the opening (19, 20, 21, 22).

7. Personal care device according to anyone of the preceding claims, wherein said protrusion (25) projects beyond the outer surface of the metal shell (7, 8) by an amount which is substantially constant along the entire opening (19, 20, 21, 22) even when the opening's contour does not extend in one plane and/or by an amount ranging from 0.05 to 1 mm or 0.1 to 0.5 mm or 0.1 to 0.3 mm.

8. Personal care device according to anyone of the preceding claims, wherein said protrusion (25) is made from soft plastic and/or hard plastic with an outer contour matching the inner contour of the opening (19, 20, 21, 22) in terms of shape and dimension to provide for sealing and/or form-fitting and/or snap-fitting engagement of the protrusion with the metal shell (7, 8).

9. Personal care device according to anyone of the preceding claims, wherein said metal shell (7, 8) has opposite end portions (17, 18) each defining a closed ring-shaped cross-section, wherein an intermediate section (16) between said opposite end portions (17, 18) includes at least one lateral opening and/or lateral perforation for accessing at least one functional component (19) accommodated inside said outer metal shell (7, 8).

10. Personal care device according to anyone of the preceding claims, wherein said outer metal shell (7, 8) is formed in one piece with an integral, homogeneous, seamless structure having a ring-like or sleeve-like shape with closed annular cross-sections.

11. Personal care device according to the preceding claim, wherein said outer metal shell (7, 8) is a hydraulic pressure-formed portion deformed by hydraulic pressure and/or a hydroformed portion.

12. Personal care device according to the anyone of the preceding claims, wherein **characterized in that** said outer metal shell (7, 8) includes at least one undercut portion (23).

13. Personal care device according to anyone of the preceding claims, wherein said outer metal shell (7, 8) includes at least one opening (19, 20, 21) surrounded by a three-dimensionally shaped metal shell section, said opening (19, 20, 21) having a three-dimensionally shaped edge contour (22) extending substantially perpendicular to the surrounding metal shell section along the entire contour of the opening, said surrounding shell portion neighboring and surrounding said opening (19, 20, 21) having a varying orientation changing along the opening (19, 20, 21).

14. Personal care device according to anyone of the preceding claims, wherein said metal shell (7, 8) has opposite end portions (17, 18) each defining a closed ring-shaped cross-section, wherein an intermediate section (16) between said opposite end portions (17, 18) includes at least one lateral opening and/or lateral perforation for accessing at least one functional component (19) accommodated inside said outer metal shell (7, 8).

15. Personal care device according to anyone of the preceding claims, wherein said outer metal shell (7, 8) has an elongated, hollow shape with frontal openings (19, 20) at opposite axial end portions, said axial end portions having closed annular cross-sections surrounding the openings (19, 20).

16. Personal care device according to anyone of the preceding claims, wherein said metal shell (7, 8) is made from from stainless steel or a steel containing chromium, nickel and molybdenum, particularly 10-25 mass% Cr, 5-20 mass% Ni and 1-5 mass% Mo or 16-18 mass% Cr, 10-14 mass% Ni and 2-3 mass% Mo.

17. Method of manufacturing a handheld personal care device such as hair cutter or tooth brush with an outer metal shell, comprising the steps of
forming the outer metal shell (7, 8) into a desired shape, and
mounting functional components (9) for performing or helping to perform a personal care function into and/or onto said formed outer metal shell (7, 8),
**characterized in that**
said forming step includes a hydraulic pressure-forming step applying hydraulic pressure onto a side of a metal shell blank (14) positioned in a mold (15) to deform the metal shell blank (14) and press an opposite side of the metal shell blank (14) against said mold (15) to adopt a contour of the mold (15), thereby forming the outer metal shell with the desired shape,
a cut out step is provided for creating at least one opening in said outer metal shell and mounting a plastic chassis part(s) within said at least one opening and wherein and outer edge of said opening is covered by said plastic chassis part and/or said plastic chassis part is projecting beyond said outer metal shell.

18. Method according to the preceding claim, wherein said metal shell blank (14) has a hollow, sleeve-like or pipe-like shape and is positioned in a cavity of said mold (15) surrounding an outer side of said metal shell blank (14), wherein the hydraulic pressure is applied to an inner side of the hollow metal shell blank, thereby expanding the hollow metal shell blank and pressing the metal shell blank (14), with an outer side, against the contour of the cavity of the mold (15) so the outer side of the metal shell blank (14) adopts the contour of the mold (15).

19. Method according to anyone of the preceding claims, wherein one or more undercut portions (23) of said outer metal shell (7, 8) are hydraulically formed in said hydraulic pressure forming step.
